# EUROPEAN PATENT APPLICATION

(11) **EP 2 642 773 A2**
(43) Date of publication of application: **25.09.2013**
(21) Application number: 13152625.3
(22) Date of filing: 25.01.2013
(51) Int. Cl.: H04W 4/08, H04W 76/02

(54) **Method and apparatus to manage wireless direct access communication group**

(30) Priority: 22.03.2012 KR 20120029536
(71) Applicant: Pantech Co., Ltd., Seoul 121-792 (KR)
(72) Inventor: Lee, Jeong-Hwan, Seoul 121-792 (KR); Seo, Hyun-Seok, Seoul 121-792 (KR)
(74) Representative: Jordan, Volker Otto Wilhelm

(57) **Abstract**

A method for managing a direct communication group in a wireless terminal includes searching for a direct communication group, collecting connection information of the direct communication group, and connecting to the terminal of the direct communication group without further user selection.An apparatus to manage a direct communication group may directly connect to a wireless terminal with the selection of a direct communication group. A method for managing a direct communication group in a terminal includes: displaying information of at least one direct communication group including at least one peripheral terminal; searching for the peripheral terminal of a selected direct communication group;directly connecting to the peripheral terminal according to selected information of the direct communication group.

## Description

### CROSS-REFERENCE TO RELATED APPLICATION

This application claims from and the benefit under 35 U.S.C. §119(a) of Korean Patent Application No. 10-2012-0029536, filed on March 22, 2012, which is incorporated by reference for all purposes as if fully set forth herein.

### BACKGROUND

FIELD

The following description relates to a method for direct access between terminals in a wireless network, and more particularly, to a method and apparatus to managewireless direct access communication groups.

DISCUSSION OF THE BACKGROUND

Wireless direct access communication refers todata transmission/reception through a wireless channel established directly between wireless communication terminals. Technologies for the wireless direct access communication (hereinafter, simply referred to as "direct access") include Bluetooth®, ZigBee®, WiFi Peer to Peer (WiFi P2P), etc. The technologies for direct access allow wireless communication terminals, such as, a smart television, a laptop computer, a tablet computer, a printer, a camera, a smart phone, a mobile phone, and a portable multimedia player, to directly share content or use shared services, without use ofa base station (BS), an access point (AP), etc.

The direct communication may be one-to-one communication through a direct access channel or one-to-multiple group communication. For one-to-one or one-to-multiple direct communication, a procedure in which each of at least two terminals directly connected to each other finds the other party and establishes a connection channel with the other party is needed. For group communication, a procedure of configuring a group between two or more terminals directly connected to each other may be further needed. However, according to a direct communication standard (for example, the WiFi P2P standard), a procedure of connecting two terminals for one-to-one communication can be configured as a procedure of configuring a group.

According to a conventional procedure of configuring a direct communication group, a user who wants to configure a group selects members of the group individually and then requests each member to connect to the user, thereby sequentially establishing connections between the user and the members. For example, if a first terminal tries to configure a group, the first terminal searches for terminals allowing wireless direct access. Then, if a plurality of terminals allowing wireless direct access isfound, the found terminals are displayed on the display of the first terminal. Successively, the first terminal's user selects a terminal (herein, referred to as a second terminal) to configure the group, from among the displayed terminals, and then, the first terminal is connected to the second terminal according to a predetermined procedure. If the user wants to configure the group with another terminal (referred to as a third terminal), the user has to repeat the procedure of selecting the third terminal from among the displayed terminals and connecting to the third terminal.

However, the conventional method of configuring the direct communication group requires a very long time ifa large number of terminals belongs to the group, and also has to repeat the one-to-one connection procedure many times, which may cause great inconvenience to users. Even ifa user tries to configure a new group or ifa user tries to reconfigure a group that has been ever configured with all or some members of the group, the one-to-one connection procedure has to be repeated many times. Particularly, if the network is congested or ifa connection channel is disconnected due to a wrong operation, etc. of a terminal, the corresponding terminal's user has to perform the one-to-one connection procedure again many times with other members belonging to the corresponding group in order to reconfigure the same group. Furthermore, even when releasing the direct communication group, the user needs to repeat a one-to-one release procedure many times with all the members belonging to the direct communication group.

### SUMMARY

Exemplary embodiments of the present invention providea method for managing wireless direct access communication groups in a wireless network, such as, configuring, releasing, and modifying wireless direct access communication groups.

Exemplary embodiments of present invention also provide an apparatus to manage wireless direct access communication groups in a wireless network, such as, configuring, releasing, and modifying wireless direct access communication groups.

Additional features of the invention will be set forth in the description which follows, and in part will be apparent from the description, or may be learned by practice of the invention.

An exemplary embodiment of the present invention discloses an apparatus to manage a direct communication group, including: a transceiver to transmit data and receive data; a data manager to extract at least one of search information and connection information from the received data; an input unit to receive an input; and a controller to control the transceiver and the data manager to extract search information according to the input, wherein the transceiver forms a direct wireless connection with the direct communication group in response to control of the controller.

An exemplary embodiment of the present invention also discloses A method for managing a direct communication group in a terminal, the method including: searching for a direct communication group including at least one peripheral terminal; collecting at least one of search information and connection information of the direct communication group; and directly connecting to the peripheral terminal according to at least one of the search information and the connection information.

An exemplary embodiment of the present invention also discloses a method for connecting to a direct communication group, including: searching for direct communication groups including at least one terminal; determining the priority of the direct communication groups; and directly connecting to a first direct communication group with the highest priority.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram of a management apparatus to manage a direct communication group according to an exemplary embodiment of the present invention.

FIG. 2A is a diagram of a list of found devicesaccording to an exemplary embodiment of the present invention.

FIG. 2B is a diagram of a list of devices to be connected according to an exemplary embodiment of the present invention.

FIG. 3 is a flowchart of a method formanaging a direct communication group, according to an exemplary embodiment of the present invention.

FIG. 4 is a diagram of a display of a list of found devicesaccording to an exemplary embodiment of the present invention.

FIG. 5 is a diagram of a method for configuring adirect communication group according to an exemplary embodiment of the present invention.

FIG. 6 is a flowchart of a method for managing a direct communication group according to an exemplary embodiment of the present invention.

FIG. 7 is a flowchart of a method for managing a direct communication group according to an exemplary embodiment of the present invention.

FIG. 8 is a diagram of a method for configuring a direct communication group according to an exemplary embodiment of the present invention.

FIG. 9 is a flowchart of a method for managing a direct communication groupaccording to an exemplary embodiment of the present invention.

FIG. 10 is a diagram of a display of connection information according to an exemplary embodiment of the present invention

FIG. 11A is a diagram of a display of connection information according to an exemplary embodiment of the present invention.

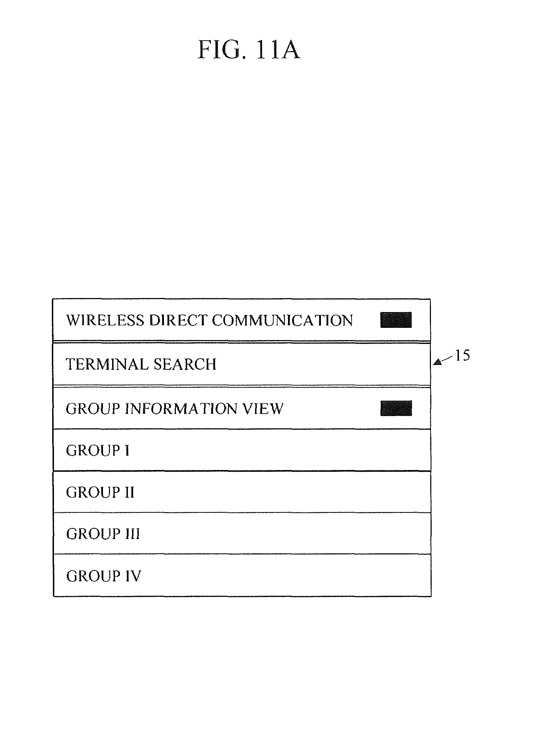

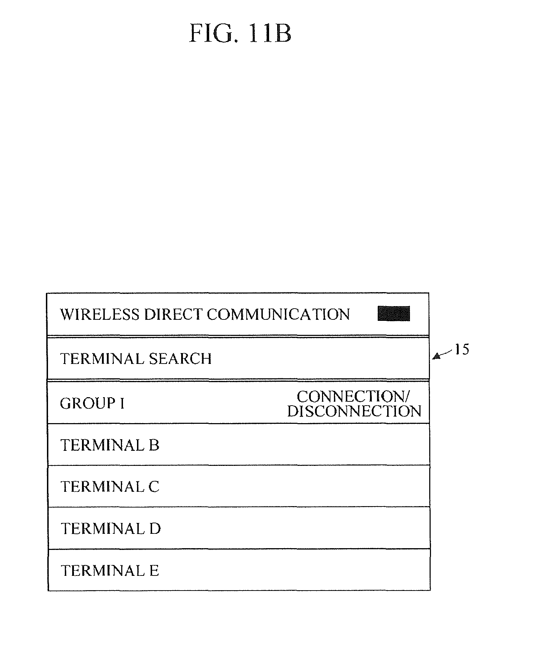

FIG. 11Bis a diagram of a display of connection information according to an exemplary embodiment of the present invention.

### DETAILED DESCRIPTION OF THE ILLUSTRATED EMBODIMENTS

Exemplary embodiments are described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ). Although features may be shown as separate, such features may be implemented together or individually. Further, although features may be illustrated in association with an exemplary embodiment, features for one or more exemplary embodiments may be combinable with features from one or more other exemplary embodiments.

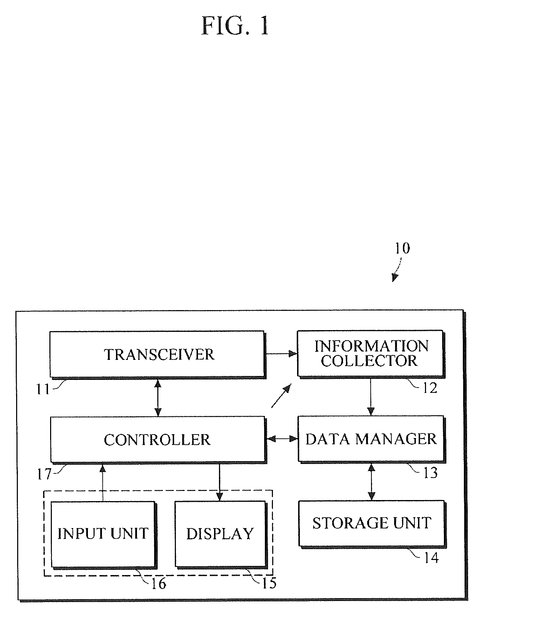

FIG. 1 is a diagram of a management apparatus to managea direct communication group according to an exemplary embodiment of the present invention. Referring to FIG. 1, amanagement apparatus 10 includes a transceiver 11, an information collector 12, a data manager 13, a storage unit 14, a display 15, an input unit 16, and a controller 17. Although some components of the management apparatus 10 shown in FIG. 1 are illustrated as being separate, aspects need not be limited thereto such that the components of the management apparatus 10 may be physically combinedor separated. The display 15 and the input unit 16 may be physically incorporated and implemented as a touch screen.

The management apparatus 10 may be installed in a wireless communication terminal having a direct communication operation. The wireless communication terminal having the direct communication operationmay be a portable device, such as a smart phone, a tablet PC, a portable multimedia player, a laptop computer, a tablet computer, etc., or may be a fixed device, such as a smart TV, a printer, etc. The management apparatus 10 may configure a group of wireless communication terminals for direct communication between the wireless communication terminals, and may manage the group. For example, managing the group may include the operations ofadding a member to the group, removing a member from the group, and changing members of the group to other groups. The management apparatus 10 may be configuredto release the group.

A direct communication group refers toa group of wireless communication terminals that perform one-to-multiple communication through an operating channel established between the terminals according to a direct communication standard, such as a WiFi Peer to Peer (P2P) standard, a Bluetooth® standard, or a ZigBee® Standard. If a plurality of terminals configures a direct communication group, the terminals can perform direct one-to-multiple group communication i.e., not via a Base Station (BS) or an Access Point (AP). Generally, in a direct communication group, a referenceterminal belonging to the direct communication group operatesas a manager, and the manager is in charge of the entire management of the group, such as group operation for group communication, power management, etc. The direct communication group may be a WiFi P2P group based on the WiFi P2P standard. According to the WiFi P2P standard, 8 terminals mayconfigure a direct communication group. In the WiFi P2P group, a terminal which operatesas a manager may bereferred to asa group owner and the other terminals may be referred to as clients.

A method of configuring a direct communication group may include two methods: a methodin which each of the terminals finds the other parties; and a method in which an operating channel that is to be used for direct communication is established between the found terminals, and roles of the terminals are determined. A role of the terminals may include a role of a group owner and of clients if the direct communication group is configured based on the WiFi P2P standard. The first process may bereferred to as a "search method" or a "search operation," and the second process may bereferred to as a "connection method" or a "connection operation."

The transceiver 11 may beused to communicate with other wireless communication terminals.The transceiver may be a Radio Frequency (RF) unit, or other communication terminal. The configuration and operation of the transceiver 11 may vary depending on a direct communication standard. The transceiver 11 may receive commands and data from the controller 17 and may transmit messages to other wireless communication terminals. The transceiver 11 may receive messages from the other wireless communication terminals and may transfer the messages to at least one of the controller 17 and the information collector 12. A message that is received or transmitted through the transceiver 11 may includea device search request/response message, a connection request/response message, or a disconnection request/response message.

The information collector 12 may be configured to collect information about other wireless communication terminals to manage a direct communication group, including to configure, to modify, and to release the direct communication group. The information collector 12 may collect information about wireless communication terminals.For example, the information collector 12 may collect search information,which may be information about peripheral wireless communication terminals that are to be directly connected.Further, the information collector 12 may collect connection information,which may be information about wireless communication terminals that have been or are directly connected to each other. The information collector 12 may collect at least one of the search information and the connection information from a message received through the transceiver 11, and the at least one of the collected search information and the connection information may be transferred to the data manager 13.

The search information may include identification information of the peripheral wireless communication terminals, and information for direct access between terminals. Search information may be included in a search request message and a search response message. The information collector 12 may collect the search information from the search request message or the search response message. In the WiFi P2P standard, the search request message may be a probe request message, and the search response message may be a probe response message. The probe request message and the probe response message may include search information (i.e., identification information, P2P capability information related to direct access, P2P device information, security-related information such as WiFi Protected Setup (WPS), etc.) of terminals that have transmitted the probe request message and the probe response message.

A method for collecting search information about peripheral wireless communication terminals will be described below. For example, if an information collection request is input by a user through the input unit 16, the controller 17 may transfer a command to transmit a search request message to the transceiver 11, and the transceiver 11 may transmit a search request message to peripheral wireless communication terminals. In response to the search request message, the peripheral wireless communication terminals may transmit search response messages to the terminal 10 which has transmitted the search request message. The search response messages may include search information. The transceiver 11 may receive the search response messages and transfers the search response messagesto the information collector 12. The information collector 12 may extract the search information from the search response messages.

The connection information may include information about wireless communication terminals that have configured a wireless communication group, and information about the wireless communication group. The information about the wireless communication terminals may be included in a connection request message and a connection response message that is received in response to the connection request message. The connection request message and the connection response message may include group negotiation information (for example, Group Owner Intent information in the WiFi P2P standard) for selecting a Group Owner (GO), search information (i.e., identification information, P2P capability information related to direct access, P2P device information, security-related information such as WiFi Protected Setup (WPS), etc.) of terminals that have transmitted the connection request message and the connection response message. The information related to the wireless communication group may include group identification information, group priority information, etc. A part of the information included in a search request message and a search response message may be used as connection information.

The data manager 13 may be configured to extract information from at least one of the search information and the connection information received from the information collector 12. The data manager 13 maystore the extracted information in the storage unit 14. The storage unit 14 may bea physical device for storing, inserting, updating, deleting, etc. information (i.e., data) received from the data manager 13. The data manager 13 may extract pieces of information from the received information such that the extracted pieces of information can be stored in referencedatabases in the storage unit 14, and may store the extracted pieces of information in the databases.

The data manager 13 may edit,correct, delete, add, etc.at least one of the search information and the connection information stored in the storage unit 14, in response to a request from the controller 17. To allow a user to edit at least one of the search information and the connection information, all or some of at least one of the search information and the connection information stored in the storage unit 14 may be displayed through the display 15. If the user inputs a request to editat last one of the displayed search information and the displayed connection information through the input unit 16, the controller 17 may transfer the edit request to the data manager 13.

Search information that is to be stored in the storage unit 14 may include at least one of device identification information, device names, etc. Connection information that is to be stored in the storage unit 14 may include at least one of group identification information, device identification information, group negotiation information, and group priority information, device names, etc. Search information and connection information may be stored, in the forms of a list of found devices and a list of devices to be connected, in the storage unit 14.

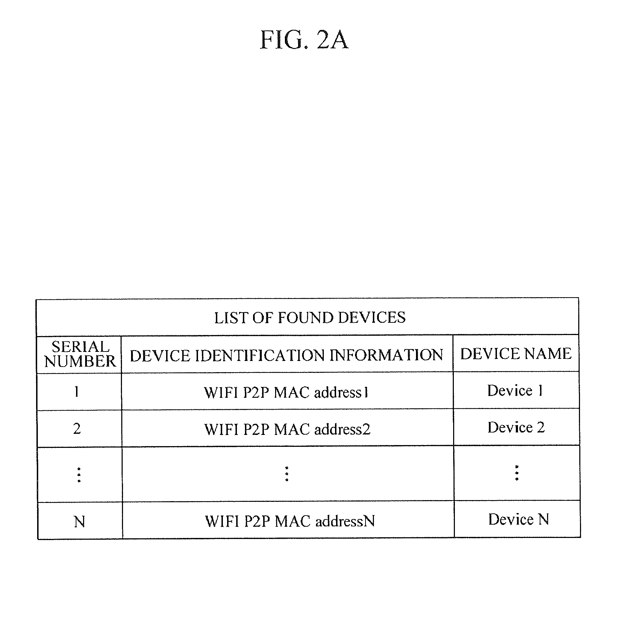

FIG. 2A is a diagram of a list of found devices according to an exemplary embodiment. Referring to FIG. 2A, the list of found devices may include device identification information of found terminals, and device names. In the WiFi P2P standard, the device identification information may be WiFi P2P MAC addresses of WiFi P2P apparatuses. Each MAC address in the WiFi P2P standard may be unique. The device names may be names (Device 1, Device 2, ..., Device N) that have been arbitrarily selected or given by a user.

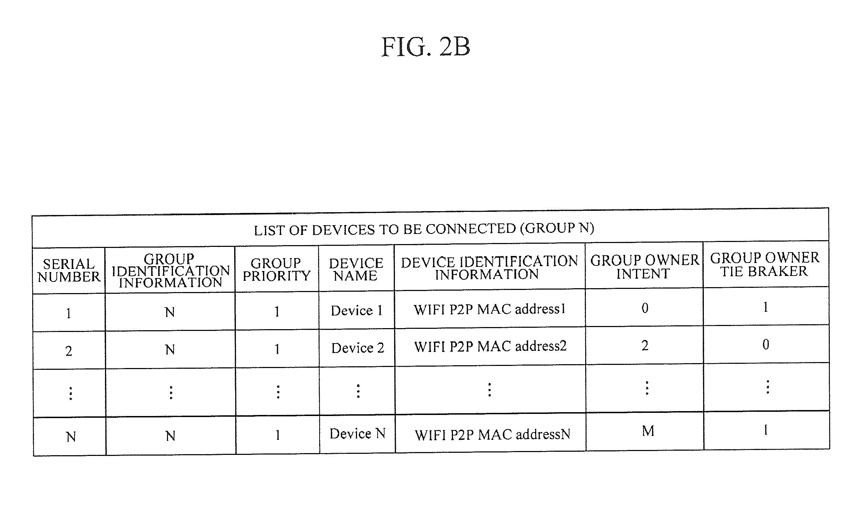

FIG. 2B is a diagram of a list of devices to be connected according to an exemplary embodiment. Although the features of FIG. 2B will be described with reference to FIG. 1, exemplary embodiments are not limited thereto.

Referring to FIG. 2, the list of devices to be connected relates to a group N. The storage unit 14 may store a plurality of lists of devices to be connected, in correspondence to a plurality of groups, respectively, in one or more referencedatabases. The list of devices to be connected may include group identification information and group priority information.The group identification information and the group priority information may be separately stored as lists of group management information.

Referring to FIG. 2B, the list of devices to be connected includes group identification information, group priority information, device identification information of terminals belonging to the corresponding group, device name information, and group negotiation information. The information may bestored in the form of a list for each group. In the WiFiP2P standard, the group identification information may be P2P Group IDs, the terminal identification information may be WiFi P2P MAC addresses, and device names may be names,such as, Device 1, Device 2, ..., Device N, that have been arbitrarily selected by a user. The group negotiation information may include Group Owner Intent information and Group Owner Tie Breaker information. The Group Owner Intent information may have a value from 0 to 15, and a terminal having the greatest Group Owner Intent value may be selected as a group owner. The Group Owner Tie Breaker information may have a value of "0" or "1," and a terminal having a Group Owner Tie Breaker value of "1" among terminals having the same Group Owner Intent value may be selected as a group owner.

Referring again to FIG. 1, the data manager 13 may read data stored in the storage unit 14 according to a request from the controller 17, and may transfer the data to the controller 17. The data manager 13 may transfer information about found terminals, included in a list of found devices, as illustrated inFIG. 2A, connection information i.e., information about a group, and information about terminals belonging to the group included in a list of devices to be connected, as illustrated insee FIG. 2B, or search information to the controller 17. The data manager 13 may operate to input data, correct data, or delete data stored in the storage unit 14 according to a request from the controller 17. The data manager 13 may have an interface for inquiring about, inserting data, deleting data, and updating data stored in the storage unit 14.

The display 15 is configured to display information to manage a direct communication group. For example, information about found terminals, information about a group, information about terminals belonging to the group, etc. may betransferred from the data manager 13 to the controller 17, and displayed on the display 15. Various information to display for a user tomanage a direct communication group, for example, a group configuration methodincluding searching for peripheral terminals and connecting to the found terminals, a methodof editing group information, etc., may be displayed on the display 15.

The input unit 16 may beconfigured to allow a user to input commands or information to manage a direct communication group. The input unit 16 may be one of various input devices including a touch pad, an input button, a voice recognizer, a motion sensor, etc. The user may input a command, such as, a search request, a connection request, etc., through the input unit 16. The user may select, through the input unit 16, one or more terminals from among a plurality of wireless communication terminals displayed on the display 15, or a group from among a plurality of groups displayed on the display 15 through the input unit 16. The user may request editing, adding, correcting, or deleting of at least one of search information and connection information stored in the storage unit 14 through the input unit 16.

The controller 17 may be configured tocontrol the management apparatus 10 to manage a direct communication group. To control the management apparatus 10, the controller 17 may control the operation of components of the management apparatus 10,i.e., the transceiver 11, the data manager 12, the storage unit 14, the display 15, and the input unit 16. For example, if at least one of a search request, a connection request, a disconnection request, etc. is received from a user, the controller 17 generates a message corresponding to the received request, and controls the transceiver 11 to transmit the message. If the transceiver 11 receives a referencemessage, the controller 17 may control the information collector 12 to collect information from the referencemessage. The controller 17 may control the data manager 13 to store information collected by the information collector 12 or information input through the input unit 16 in the storage unit 14. The controller 17 may control the data manager 13 to edit, correct, delete, etc. information stored in the storage unit 14, or to read the information stored in the storage unit 14. The controller 17 may control the display 15 to display information to manage a direct communication group and the information read through the data management unit 13.

The controller 17 may process various commands or data received from the user through the input unit 16, and control the components of the management apparatus 10 to process a command or data. The operation of the controller 17 to process a command or data depends on the kind of the received command or data. Hereinafter, the control operation of the controller 17 to manage a direct communication group will be described in detail with reference to the appended drawings.

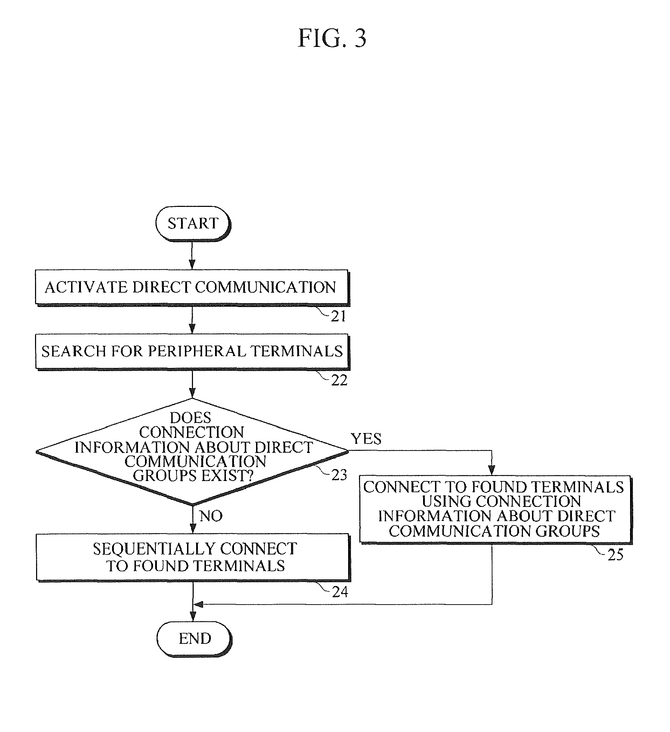

FIG. 3 is a flowchart of a method formanaging a direct communication group according to an exemplary embodiment of the present invention. Although FIG. 3 will be described with reference to FIG. 1, exemplary embodiments are not limited thereto.

The method for managing a direct communication group configures a new group orreconfigures a group that has been previously configured. The group that has been configured may include some wireless communication terminals which have been configured and some wireless communication terminals which have not been configured.

Referring to FIG. 1 and FIG. 3, in operation 21, a direct communication operationof a wireless communication terminal is activated. In the case of direct communication based on the WiFi P2P standard, the direct communication operationmay be a WiFi P2P operationor a WiFi direct operation. A method for activating the direct communication operationis not limited. For example, the direct communication operationmay be activated by selecting the direct communication operationfrom a setting menu of the wireless communication terminal, manipulating the corresponding button installed in the wireless communication terminal, selecting the corresponding icon displayed on the display 15, etc.

In operation 22, the controller 17 searches for peripheral wireless communication terminals that may be disposed near the wireless communication terminal. The operation of searching for the peripheral wireless communication terminals may be performed automatically or if a user's search command is received through the input unit 16. To search for the peripheral wireless communication terminals, the controller 17 may generate a search request message and transmit the search request message through the transceiver 11, and the information collector 12 may collect search information about the peripheral wireless communication terminals from search response messages received through the transceiver 11.

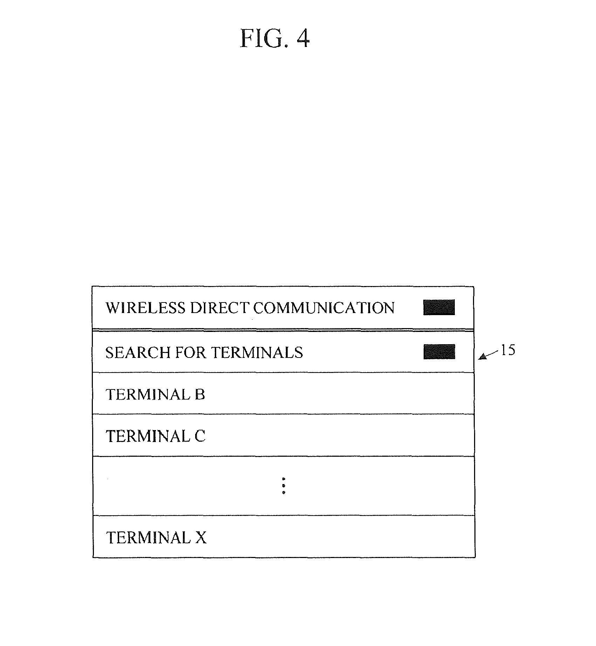

The search information collected by the information collector 12 may be stored in the storage unit 14 through the data manager 13.The search information stored in the storage unit 14 may be displayed with a reference format on the display 15 to allow the user to select desired information. FIG. 4 is a diagram of a display of list of found devices according to an exemplary embodiment of the present invention. FIG. 4 may correspond to the case where a "wireless direct communication" menu is activated and a user selects a "search for terminal" menu. Referring to FIG. 4, a list of peripheral terminals,TerminalB, Terminal C, ...,Terminal X, found in operation 22 of FIG. 3 is displayed below the "search for terminal" menu.

Referring again to FIG. 3, in operation 23, the controller 17 determines ifthe storage unit 14 stores connection information about a direct communication group. The controller 17 may inquire from the data manager 13 about whether the storage unit 14 stores connection information about a direct communication group. The data manager 13 may check databases stored in the storage unit 14 and transfer the result of the check to the controller 17. The connection information about the direct communication group stored in the storage unit 14 may be information about a direct communication group that the wireless communication terminal has configured, i.e., connection information generated and stored for a referencedirect communication group.

Although depicted as being performed sequentially, those skilled in the art will appreciate that at least a portion of the operations of method of FIG. 3 may be performed contemporaneously, or in a different order than presented in FIG. 3. For example, the operation 22 may be performed after the operation 23 or that the operations 22 and 23 may be simultaneously performed.

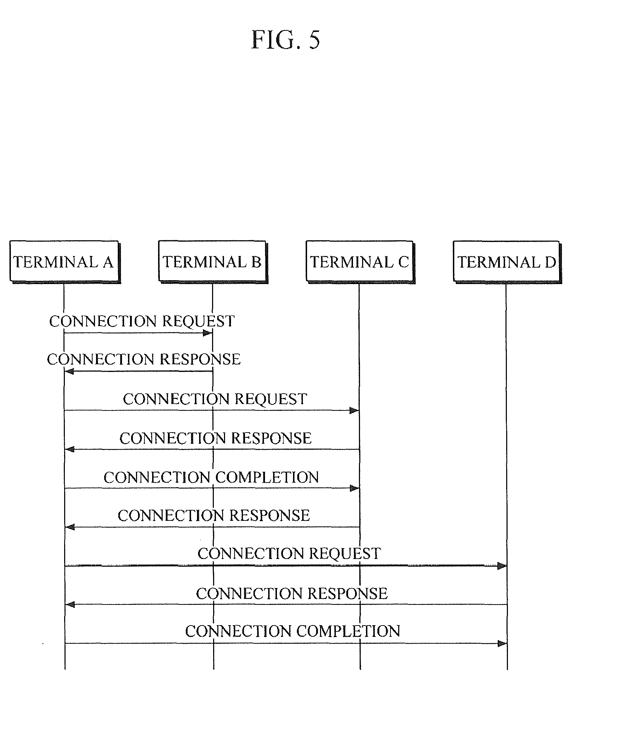

If it is determined in operation 23 that the storage unit 14 does not store connection information about the direct communication group, in operation 24, a method for connecting to the peripheral terminals found in operation 22 to configure a new direct communication group is performed. The peripheral terminals may be sequentially connected in operation 24as illustrated in FIG. 3; however, aspects need not be limited thereto such that the peripheral terminals need not be sequentially connected. The process for configuring the new direct communication group will be described in detail with reference to FIG. 1 and FIG. 5.

FIG. 5 is a diagram of a method for configuring adirect communication group according to an exemplary embodiment. Although FIG. 5 will be described with reference to FIG. 1, exemplary embodiments are not limited thereto.

Referring to FIG. 1 and FIG. 5, if a terminal A attemptsto configure a direct communication group, the controller 17 of the terminal A may generate a connection request message, and may transmit the connection request message to another terminal, for example, a terminal B, selected by a user from among the found peripheral terminals, through the transceiver 11. If the controller 17 receives a connection response message from the terminal B through the transceiver 11, the controller 17 may transmit a connection completion message,for example an ACK message to acknowledge the connection response message, to the terminal B, completing a connection to the terminal B. The controller 17 may perform connection method for connecting to the other terminals, for example, terminal C and terminal D, among the found peripheral terminals to configure a direct communication group with two or more terminals, i.e., the terminal B, the terminal C, and the terminal D. The method for connecting to the other terminals may sequentially connect to the other terminals. Information,as illustrated in FIG. 2B, about the newly configured direct communication group may be stored in the storage unit 14 through the data manager 13.

Referring again to FIG. 1 and FIG. 3, if it is determined in operation 23 that the storage unit 14 stores connection information about the direct communication group, in operation 25, the controller 17 uses the connection information about the direct communication group to connect to all or some of the peripheral terminals found in operation 22.The operation 25 may reconfigure the selected direct communication group as the direct communication group whose connection information has been stored in the storage unit 14. In operation 25, a method for using the stored connection information about the direct communication group may be implemented in various ways, which will be described later. If the user selectsto configure a new direct communication group, instead of reconfiguring a direct communication group that has been configured, in operation 25, acorresponding terminal may connect to selected terminals among the found peripheral terminals. The selected terminals may be sequentially connected to the corresponding terminal. In operation 25, the user configures a new direct communication group if there is no connection information about the direct communication group after the user searches for connection information about the direct communication group from the storage unit 14.

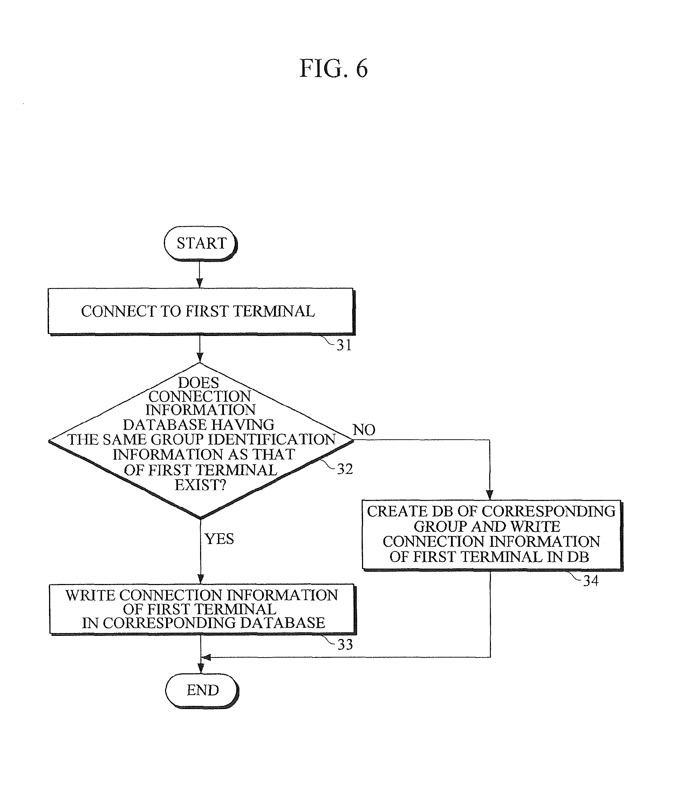

FIG. 6 is a flowchart of a method formanaging a direct communication group according to an exemplary embodiment. FIG. 6 may corresponds to a method for configuring the direct communication group in operation 24 or operation 25 of FIG. 3 and storing connection information about the direct communication group in the storage unit 14. Although FIG. 6 will be described with reference to FIG. 1 and FIG. 3, exemplary embodiments are not limited thereto.

Referring to FIG. 1 and FIG. 6, in operation 31, a connection to a first terminal is performed. The process of connecting to the first terminal may be performed in operation 24 or 25 of FIG. 3. To connect to the first terminal, the controller 17 may generate a connection request message, may transmit the connection request message to the first terminal through the transceiver 11. The controller 17 may receive a connection response message from the first terminal and may transmit a connection completion message to the first terminal to complete the connection to the first terminal.The information collector 12 may collect connection information, for example, group identification information, device name information, device identification information, group negotiation information, etc. about the first terminal from the connection response message.

In operation 32, the controller 17 determines ifa connection information database (DB) having the same group identification information as that of the first terminal exists in the storage unit 14. For example, the controller 17 may perform operation 32 by controlling the data manager 13 to determine if a list of devices to be connected, having the same group identification information as that of the first terminal exists in the storage unit 14.

If it is determined in operation 32 that a connection information DBhaving the same group identification information as that of the first terminal exists in the storage unit 14, in operation 33, the controller 17 may write the connection information about the first terminal in the corresponding database. If the connection information about the first terminal exists in a connection information database corresponding to the direct communication group, the controller 17 may overwrite the connection information about the first terminal or compare the connection information about the first terminal to the existing connection information to update the existing connection information based on differences from the connection information of the first terminal. If it is determined that a connection information DBhaving the same group identification information as that of the first terminal does not exist, the controller 17 may create a new connection information database for the direct communication group, and may write the connection information about the first terminal in the new connection information database, in operation 34.

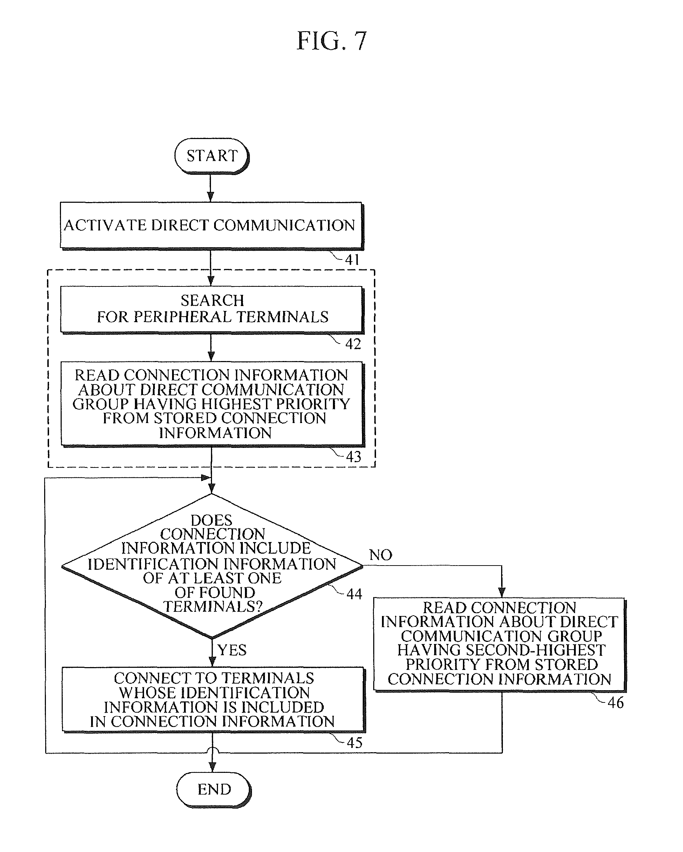

FIG. 7 is a flowchart of a method for managing a direct communication group according to an exemplary embodiment. FIG. 7 may correspond to a method for reconfiguring a direct communication group among the plurality of direct communication groups based on group priority. FIG. 7 may correspond to a case in which information about a plurality of direct communication groups exists in the storage unit 14, such as, in operation 25 of FIG. 3,Although FIG. 7 will be described with reference to FIG. 1 and FIG. 3, exemplary embodiments are not limited thereto.

Referring to FIG. 1 and FIG. 7, in operation 41, a direct communication operationof a wireless communication terminal is activated. In the WiFi P2P standard, the direct communication operationmay be a WiFi P2P operationor a WiFi direct operation. The method of activating a direct communication operationis not limited. For example, the direct communication operationmay be activated by selecting the direct communication operationfrom a setting menu of the wireless communication terminal, manipulating the corresponding button installed in the wireless communication terminal, selecting the corresponding icon displayed on the display 15, etc.

In operation 42, the controller 17 searches for peripheral wireless communication terminals that may be disposed near the wireless communication terminal. The operation of searching for the peripheral wireless communication terminals may be performed automatically or ifa user's search command is received through the input unit 16. To search for the peripheral wireless communication terminals, the controller 17 may generate a search request message and may transmit the search request message through the transceiver 11. The information collector 12 may collect search information about the peripheral wireless communication terminals from search response messages received through the transceiver 11.

In operation 43, the controller 17 reads connection information about a direct communication group having the highest priority, from the connection information of direct communication groups, stored in the storage unit 14. To read the connection information about the direct communication group having the highest priority, the controller 17 may request the data manager 13 to send the connection information about the direct communication group having the highest priority. The data manager 13 may acquire the connection information about the direct communication group having the highest priority from the connection information about direct communication groups, stored in the storage unit 14, and may transfer the acquired connection information to the controller 17.

Although depicted as being performed sequentially, those skilled in the art will appreciate that at least a portion of the operations of method of FIG. 7 may be performed contemporaneously, or in a different order than presented in FIG. 7. For example, operation 42 may be performed after the operation 43 or that the operation 42 and the operation 43 may besimultaneously performed, and the operation 43 and the operation 46 may besimultaneously performed. If operation 43 and operation 46 are simultaneously performed, in the operation 43, all the connection information about the direct connection groups, stored in the storage unit 14, is read, and the controller 17 may use the read connection information sequentially according to referencepriority.

In operation 44, the controller 17 determines if the connection information about the direct communication group having the highest priority includes identification information of at least one of the peripheral terminals found in operation 42. In other words, in operation 44, it is determined whether identification information of at least one of the peripheral terminals found in operation 42 is included in the connection information about the direct communication group having the highest priority. If identification information of one or more of the found peripheral terminals is included in the connection information about the direct communication group having the highest priority, in operation 45, the controller 17 may perform a method for connecting to the corresponding terminals. The connection method may be automatically performed with the corresponding terminals. In other words, a user does not need to individually select terminals belonging to the direct communication group having the highest priority and connect to the selected terminals, individually, and the controller 17 of the management apparatus 10 performs the connection process automatically.

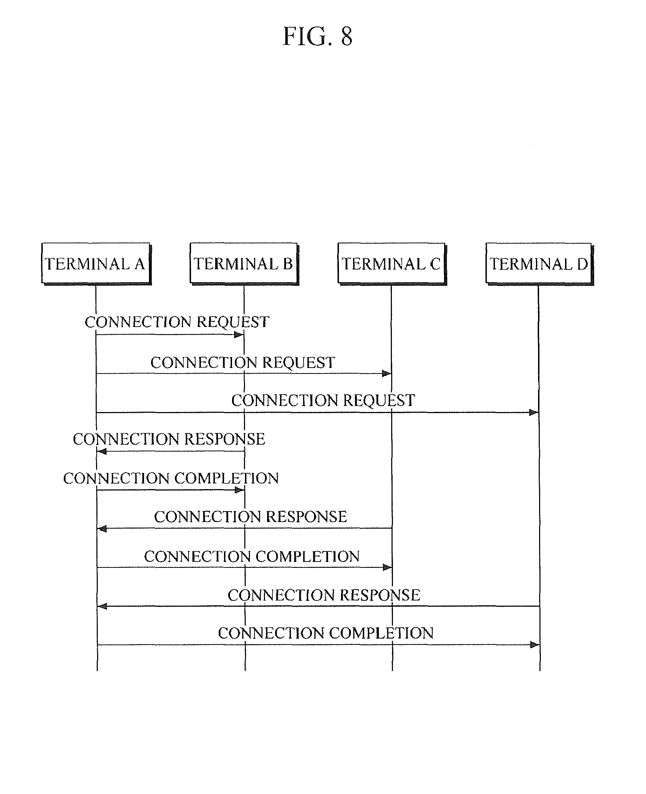

FIG. 8 is a diagram of a method for reconfiguring a direct communication group according to an exemplary embodiment of the present invention. Although FIG. 8 will be described with reference to the features of FIG. 7 and FIG. 1, exemplary embodiments are not limited thereto.

The example shown in FIG. 8 corresponds to the case where ifidentification information of the three terminals,terminals B, terminal C, and terminal D found in operation 44 of FIG. 7 is included in connection information of a direct communication group having the highest priority, a method for connecting the terminal A to the terminal B, the terminal C, and the terminal D is performed in operation 45 of FIG. 7. The example shown in FIG. 8 also may be applied in the to the reconfiguring of an existing direct communication group by performing a method for connecting to a plurality of terminals based on stored connection information about a referencegroup.

Referring to FIG. 1 and FIG. 8, ifa terminal A tries to reconfigure a direct communication group, the terminal A may transmit a connect request message to the terminal B, the terminal C, and the terminal D, substantially simultaneously or sequentially. The process of transmitting the connection request message to the terminal B, the terminal C, and terminal D may be automatically performed by the controller 17 of the management apparatus 10 of the terminal A. If the terminal A receives connection response messages from the terminal B, the terminal C, and the terminal D, the terminal A may transmit a connection completion message to the terminal B, the terminal C, and the terminal D, in response to the connection response messages, thereby completing the process of connecting to the terminal B, the terminal C, and the terminal D. The terminal A may transmit the connection completion message to the terminal B, the terminal C, the terminal D sequentially or substantially simultaneously.

Referring again to FIG. 1 and FIG. 7, if identification information of the found terminals is not included in the connection information about the direct communication group having the highest priority, in operation 46, connection information about a direct communication group having the second-highest priority among the connection information about direct communication groups, stored in the storage unit 14, is read. To read the connection information about the direct communication group having the second-highest priority, the controller 17 may request the data manager 13 for the connection information about the direct communication group having the second-highest priority, among the connection information about direct communication groups, stored in the storage unit 14. The data manager 13may transfer the connection information about the direct communication group having the second-highest priority to the controller 17.In operation 44, the controller 17 determines ifidentification information of the peripheral terminals found in operation 42 is included in the connection information about the direct communication group having the second-highest priority. The methodproceeds to operation 45 or operation 46 according to the result of the determination. If identification information of the peripheral terminals found in operation 42 is notincluded in the connection information about the direct communication group having the second-highest priority, the methodproceeds to operation 46 of reading connection information about a direct communication group having the next lowestpriority. The operation 46 may be performed in the descending order of priority until all the stored connection information about direct communication groups is read.

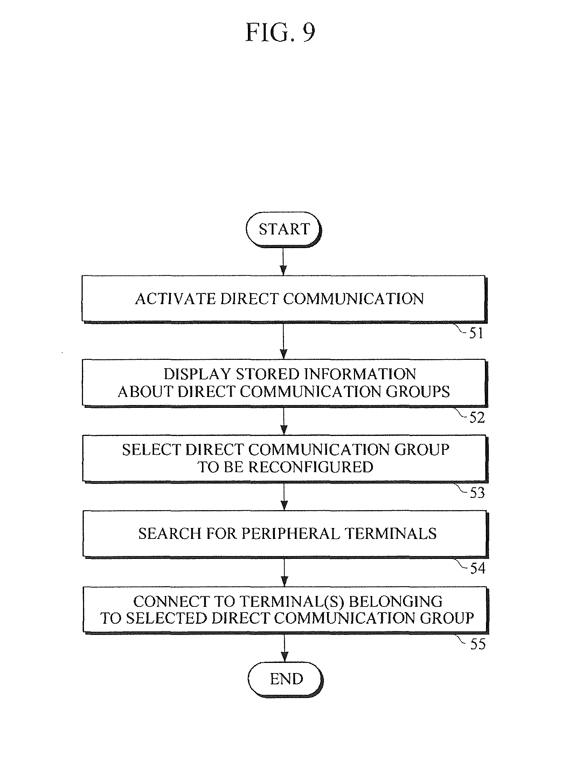

FIG. 9 is a flowchart of a method for managing a direct communication group according to an exemplary embodiment of the present invention. Although FIG. 9 will be described with reference to the features of FIG. 1, exemplary embodiments are not limited thereto.

FIG. 9 may corresponds to the case where ifone or more pieces of information about direct communication groups have been stored, a user may selects a direct communication group from among the direct communication groups and may connect to one or more terminals belonging to the selected direct communication group, and may thereby reconfigurean existing direct communication group.

Referring to FIG. 1 and FIG. 9, in operation 51, a direct communication operationof a wireless communication terminal may beactivated. In adirect communication based on the WiFi P2P standard, the direct communication operationmay be a WiFi P2P operationor a WiFi direct operation, but is not limited thereto. For example, the direct communication operationmay be activated by selecting the direct communication operation from a setting menu of the wireless communication terminal, manipulating the corresponding button installed in the wireless communication terminal, selecting the corresponding icon displayed on the display 15, etc.

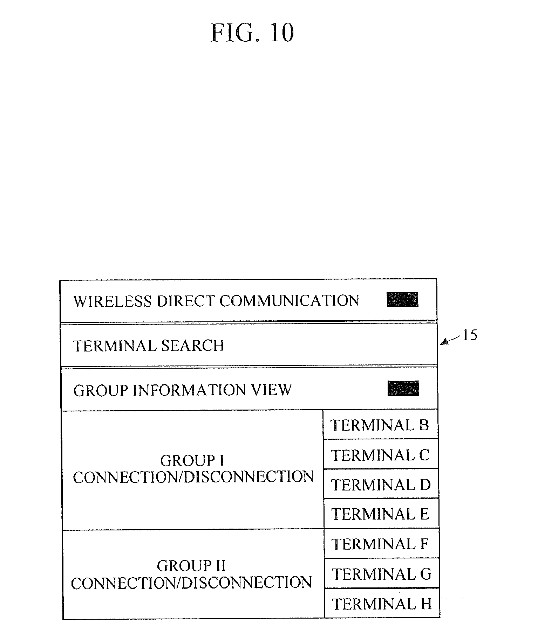

FIG. 10 is a diagram of a display of connection information according to an exemplary embodiment of the present invention. FIG. 11A is a diagram of a display of connection information according to an exemplary embodiment of the present invention.FIG. 11Bis a diagram of a display of connection information according to an exemplary embodiment of the present invention.

Referring again to FIG. 9, if the direct communication operationis activated, in operation 52, the controller 17 may control the display 15 to display information about the direct communication groups. The controller 17 may read information about direct communication groups stored in the storage unit 14 through the data manager 13 to control the display 15 to display the direct communication group. Operation 52 may be performed automatically ifthe direct communication operationis activated or if the corresponding command is input by the user, for example, ifa "group information view" menu is selected, as illustrated in FIG. 10. The display 15 may display the "group information view" menu or an inquiry message about whether to execute "group information view."

A method for displaying information about direct communication groups, stored in the storage unit 14, on the display 15 is not limited. For example, as shown in FIG. 10, group identification information, i.e., Group I and Group II and identification information or names, i.e., Terminal A through Terminal H of devices belonging to the individual groups may be displayed on the display 15. As shown in FIG. 11A, group identification information, i.e., Group I through Group IV, is displayed on the display 15. If a user selects a group, for example Group I, from among groups displayed on the display 15, identification information or names, for example Terminal B through Terminal E, of devices belonging to the selected group may be displayed on the display 15as illustrated in FIG. 11B. However, that the display formats of the display 15 shown in FIG. 10, FIG. 11A, and FIG. 11Bare not limited thereto and may be formatted in different arrangements.

As shown in FIG. 10 and FIG. 11A, an arrangement order of the direct communication groups may bearbitrarily selected, for example, the descending or ascending order of serial numbers of databases stored in the storage unit 14, or according to priority information of the direct communication groups. The controller 17 may read the priority information of the direct communication groups from connection information about the direct communication groups, stored in the storage unit 14, and arrange direct communication groups having higher priority in the left part or the upper part of the display 15.

The information about the direction communication groups, which is displayed on the display 15, as shown in FIG. 10, FIG. 11A, and FIG. 11B, may include configuration information of the direct communication groups, which may represent the current states of the direct communication groups. The current state of each direct communication group may be one of two states: one is the state where the direction communication group has been already configured since direct communication access to one or more terminals has been completed; and the other is the state where the direct communication group has never been configured since no direct communication access to any terminal has been completed. A method for displaying group connection information is not limited thereto. For example, if at least one of terminals belonging to the corresponding group has been connected to the terminal, the group may be displayed differently from the other groups on the display 15 such that the group can be visually distinguished from the other groups.

Referring again to FIG. 1 and FIG. 9, in operation 53, the user selects a direct communication group from the list of direct communication groups, displayed on the display 15 to be reconfigured. The user may select the direct communication group through the input unit 16 of the management apparatus 10. A method for selecting a direct communication group is not limited. For example, the user may select a direct communication group by touching the corresponding direct communication group from a list of direct communication groups, for example, the list of direct communication groups as shown in FIG. 10, displayed on the display 15, by using a voice command,a motion, etc. The user may select a direct communication group by selecting a group name, for example Group I, menu displayed on the display 15 as shown in FIG. 11B, or by using a voice command,motion, etc.

In operation 54, the controller 17 searches for peripheral wireless communication terminals that exist near the corresponding wireless communication terminal. The operation of searching for the peripheral wireless communication terminals may be performed automatically or ifa user's search command is received through the input unit 16. To search for the peripheral wireless communication terminals, the controller 17 may generate a search request message and transmit the search request message through the transceiver 11. The information collector 12 may collect information i.e., search information about the peripheral wireless communication terminals from search response messages received through the transceiver 11.

Although depicted as being performed sequentially, those skilled in the art will appreciate that at least a portion of the operations of method of FIG. 9 may be performed contemporaneously, or in a different order than presented in FIG. 9. For example, it is possible that the operation 54 is performed after operation 51 of activating the direct communication operation of the wireless communication terminal, and also operation 52 of displaying the information of the direct communication groups and the operation 53 of selecting the direct communication group are performed in this order or in the reverse order. For example, it may be possible that the operation 54 of searching for the peripheral wireless communication terminals is performed before the operation 52 of displaying the information of the direct communication groups or that the operation 52 and operation 54 are simultaneously performed. If the operation 52 is performed after or before the operation 54, the information about the direct communication groups, as shown in FIG. 10 and FIG. 11A, may be displayed in such a manner that a user can visually recognize whether any one of the peripheral wireless communication terminals found in operation 54 belongs to the direct communication group.

In operation 55, the controller 17 performs a method for connecting to a wireless communication terminal or terminals belonging to the direct communication group selected in operation 53 and among the peripheral wireless communication terminals found in operation 54. The operation 55 may be performed automatically by the controller 17 or according to the procedure described above with reference to FIG. 8.

According to the exemplary embodiments, the operations which a user performs to configure a direct communication group is selecting a direct communication group to configure, from a list of direct communication groups. A user may configure a direct communication group without individually selecting terminals belonging to the direct communication group and connecting to the selected terminals, individually. A process of reconfiguring the corresponding direct communication group with all or some of found terminals may beautomatically performed by the controller 17.

According to the exemplary embodiments, since connection information about wireless direct access communication groups that have been configured in a wireless network is stored, and the stored connection information is used to configure or reconfigure a wireless direct access communication group, a user mayconfigure a wireless direct access communication group.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A method for managing a direct communication group in a wireless terminal includes searching for a direct communication group, collecting connection information of the direct communication group, and connecting to the terminal of the direct communication group without further user selection.An apparatus to manage a direct communication group may directly connect to a wireless terminal with the selection of a direct communication group. A method for managing a direct communication group in a terminal includes: displayinginformation of at least one direct communication group including at least one peripheral terminal; searching for the peripheral terminal of a selected direct communication group;directly connecting to the peripheral terminal according to selected information of the direct communication group.

## Claims

1. An apparatus to manage a direct communication group, comprising:
a transceiver to transmit data and receive data;
a data manager to extract at least one of search information and
connection information from the received data;
an input unit to receive an input; and
a controller to control the transceiver and the data manager to extract at least one of the search information and connection information according to the input,
wherein the transceiver forms a direct wireless connection with the direct communication group in response to control of the controller.

2. The apparatus of claim 1, further comprising:
an information collector to collect at least one of the search information and the connection information of the direct communication group from the received data;
or/and
a storage unit to store search information and connection information of the direct communication group received from the data manager.

3. The apparatus of claim 1 or 2,
wherein search information comprises at least one of identification information, P2P capability information related to direct access, P2P device information, and security-related information;
or/and
wherein connection information comprises at least one of group identification information, device identification information, group negotiation information, and group priority information, and device names.

4. The apparatus of one of claims 1 to 3, wherein the direct communication group includes at least one wireless communication terminals, preferably at least two wireless communication terminals.

5. The apparatus of one of claims 1 to 4, wherein the direct communication group includes at most eight wireless communication terminals.

6. A method for managing a direct communication group in a terminal, the method comprising:
searching for a direct communication group including at least one peripheral terminal;
collecting at least one of search information and connection information of the direct communication group; and
directly connecting to the peripheral terminal according to at least one of the search information and the connection information, preferably according to group priority information of the connection information.

7. The method of claim 6, wherein connecting to the peripheral terminals according to the connection information comprises:
determining if connection information includes identification information of a first terminal; and
connecting to the first terminal;
wherein connecting to the first terminal preferably comprises:
generating and directly transmitting a connection request message to the first terminal;
receiving a connection response message from the first terminal; and
collecting connection information from the connection response message.

8. A method for connecting to a direct communication group, preferably according to claim 6 or 7, comprising:
searching for direct communication groups including at least one terminal;
determining the priority of the direct communication groups; and
directly connecting to a first direct communication group with the highest priority.

9. The method of claim 8, wherein directly connecting to the direct communication group comprises:
configuring the first direct communication group according to connection information;
wherein configuring the first direct communication group according to connection information preferably comprises:
directly transmitting a connection request to terminals of the first direct communication group;
receiving a connection response message from the terminals of the first direct communication group; and
directly transmitting a connection completion message to the terminals of the first direct communication group.

10. The method of claim 9,
wherein transmitting the connection request to the terminals of the first direct communication group are transmitted simultaneously;
or
wherein transmitting the connection request to the terminals of the first direct communication group are transmitted sequentially.

11. A method for managing a direct communication group in a terminal, preferably according to one of claims 6 to 10, the method comprising:
displaying information of at least one direct communication group including at least one peripheral terminal;
searching for the peripheral terminal of a selected direct communication group;
directly connecting to the peripheral terminal according to selected information of the direct communication group.

12. The method of claim 11, wherein displaying information of a direct communication group includes displaying at least one of group identification information and device identification information.

13. The method of claim 11 or 12, wherein connecting to the peripheral terminals comprises:
connecting to the peripheral terminal according to at least one of search information and connection information;
wherein the search information preferably includes at least one of group information and terminal information.

14. The method of one of claims 6 to 13, wherein the direct communication group includes at least one wireless communication terminal, preferably at least two wireless communication terminals.

15. The method of one of claims 6 to 14, wherein the direct communication group includes at most eight wireless communication terminals.
